# EUROPEAN PATENT SPECIFICATION

(11) **EP 2 541 713 B1**
(45) Date of publication and mention of the grant of the patent: **13.05.2015**
(21) Application number: 10846527.9
(22) Date of filing: 26.02.2010
(51) Int. Cl.: H02G 9/04, H02G 1/06

(54) **FIXING STRUCTURE FOR TROUGH AND LID, AND FIXING METHOD FOR TROUGH AND LID**
FIXIERSTRUKTUR FÜR TROG UND DECKEL SOWIE FIXIERVERFAHREN FÜR TROG UND DECKEL
STRUCTURE DE FIXATION POUR CUVE ET COUVERCLE, AINSI QUE PROCÉDÉ DE FIXATION POUR CUVE ET COUVERCLE

(43) Date of publication of application: 02.01.2013
(73) Proprietor: Furukawa Electric Co., Ltd., Chiyoda-ku Tokyo 100-8322 (JP)
(72) Inventor: HABU, Koji, Tokyo 100-8322 (JP); OKAMOTO, Kensuke, Tokyo 100-8322 (JP)
(74) Representative: Knights, Rupert
(86) International application number: PCT/JP2010/053082
(87) International publication number: WO 2011/104863

(56) References cited:
- WO-A1-2004/034539
- FR-A1- 2 934 336
- GB-A- 2 331 316
- JP-A- 58 006 022
- JP-A- 2002 233 027
- JP-A- 2005 094 958
- JP-U- 55 173 189
- JP-U- 59 164 442
- US-A- 4 594 157
- US-A1- 2003 123 929
- US-B1- 7 648 319

## Description

### Technical Field

The present invention relates to the fixing structure etc. which fix a trough housing cables inside and placed along a railroad and a road side or the like, and a lid provided in the trough upper part.

### Description of Related Art

Conventionally, a plastic trough stores various cables inside and constructed over a long distance. In this case, a lid is provided in the upper part of a trough and the lid is fixed on the trough.

For example of such fixing method, there is a trough fixing clip having a hook. The clip is provided on both sides of the trough. The hook is rotated around a joint part of the clip and the hook. The clip engages the lid from both sides of the trough and fixes the lid. (Patent document 1)

Moreover, there is a lid fixing member for troughs having a top plate part and a side plate part. The lid fixing member can fix a lid to a trough by locking the side plate part to a side wall part of the trough, where a lid is pressed down by the top plate part.

### (Patent document 2)

Moreover, there is lid fixing structure of a trough which fixes a lid to a trough main part by clamping the constricted part of a lid control pin, which penetrates a lid, by elastic clamping pieces. Receptacle metal fittings with a pair of elastic clamping pieces that face via a gap are attached to the upper end of the side wall part of the trough.

### (Patent document 3)

Moreover, various methods are proposed, such as the method of fixing a lid to a trough by making the bolt penetrating a lid screw together with a nut, which is beforehand cast in the upper part of the trough side wall.
(Patent document 4).
French Patent No. FR 2,934,336 discloses a nut clipping device.

### Related Art Document

Patent document 1: JP, A, 2005-94958, "CLIP FOR SECURING TROUGH"
Patent document 2: JP, A, 2006-175462, "MEMBER FOR SECURING COVER FOR TROUGH, TROUGH AND METHOD FOR ATTACHING/DETACHING MEMBER FOR SECURING COVER FOR TROUGH"
Patent document 3: JP, A, 2008-199756, "TROUGH-COVER FIXTURE"
Patent document 4: FR 2,934,336 A1

### Disclosure of the Invention

### Problem(s) to be Solved by the Invention

On the other hand, such troughs may be laid under the ground. For example, concrete may be poured around a trough, so that the trough upper surface where the lid was closed may be approximately in agreement with the surrounding ground height. In this case, the peripheral face of the side wall of a trough and the side part of a lid approximately contact the concrete poured and a gap between the external surface of the trough and the concrete are hardly formed.

In such condition of use, neither methods of patent documents 1 nor patent documents 2, can be adopted. Hence, only when a gap is existed in the side of a trough, a lid can be opened and closed in the fixing structure of a lid indicated by patent document 1 and patent document 2. For example, if concrete is poured around, the clip of patent document 1 cannot rotate a hook. The lid fixing member for a trough of patent document 2 cannot insert a side plate part in the external surface of a side wall part of a trough. When using the fixing method of patent document 1 and patent document 2, the circumference of a trough may be filled up with sand, gravel, etc., instead of pouring with concrete, but it becomes the almost same situation also in this case.

In the method of patent document 3, although a lid is fixable from the upper part of a lid, there is a problem that the fixed strength for fixing a lid is low. Since it is only having put the pin by the elastic deformation force of an elastic clamping element, when strong force is added for example, there is a possibility that a lid may easily separate from a trough.

In the method of fixing a lid with a bolt using the nut cast in the trough, the productivity of a trough is bad, in order to set a nut in a mold and to cast it at the time of trough manufacture. In this method, when a bolt is fastened too much tightly, a nut can rotate inside resin and a trough side wall can be damaged with the nut, further. Usually, although the knurl and the like for rotation stops are given to a nut, since fixing of the nut by resin is not so strong, when bolting is strong, since resin deforms and a nut is slippery to resin, a bolt may fall out so that bolting is not effective, or a bolt may loosen. On such a state, the whole trough main part needs to be replaced.

Thus, the conventional fixing method of a trough and a lid does not satisfy the demand that it can be used at the place where concrete is poured around the trough and there is no gaps in the trough perimeter, it is excellent in workability, it is hard to break and the fixed strength of a lid is high.

The present invention is made in view of such a problem and targets to provide the fixing structure etc. of a trough and a lid that can be used even if there is no gap in the circumference, the fixed strength of a trough and a lid is very high, it is excellent in workability, and it is hard to break.

### Means for Solving the Problem

The present invention provides the fixing structure of the trough of independent Claims 1 and 2, and the fixing method of the trough of independent Claims 7 and 8. The dependent claims specify preferred but optional features. The 1st invention to achieve the above-mentioned purpose is a fixing structure of the trough which has a bottom and side wall parts provided in both sides of said bottom, and a lid put on the upper opening of said trough using the fixing bracket, wherein a projection part is formed outward in the both sides of said side wall parts near the upper end of said trough; said fixing bracket has upper and lower projection grasping parts for grasping said projection part from the upper and lower sides, and a connecting part which connects said upper and lower projection grasping parts; a nut part is fixed to at least one part of the said projection grasping part; a positioning lug projected to the inside is formed at least at one of insides of said upper and lower projection grasping parts of said fixing bracket; a slot is established in the position corresponding to said positioning lug of said fixing bracket in said projection part of said trough; said positioning lug is inserted in said slot, and said fixing bracket is attached to said trough from both sides so that said projection part is grasped by said upper and lower projection grasping parts; and a bolt is provided and penetrates said lid from the upper part of said lid where said lid is closed, and said lid is fixed to said trough by fixing said bolt to said nut part.

Said nut part may be provided at least in either the undersurface side of said lower projection grasping part, or the upper surface side of said upper projection grasping part, and said nut part may be a female screw part formed in said lower projection grasping part or said upper projection grasping part.

Said nut part may be joined to the plate member and said plate member to which said nut part is joined is attached to said upper projection grasping part with a bolt, and said nut part may be further provided in the undersurface side of said lower projection grasping part.

A hook which can lock said lid part from the outside may be formed in said connecting part.

According to the 1st invention, even if there is no gap around outside a trough, fixing operation can be performed only from the trough upper part. Since the nut part is being fixed to the projection grasping part, even if a bolt is fastened to a nut part, a nut part does not rotate or a trough side wall part is not damaged. When the nut part was especially provided in the undersurface side of the lower projection grasping part and a bolt is fastened, the lower projection grasping part grasps the projection part of a trough side wall certainly, and a lid is certainly fixed. Hence, the fixed strength of a trough and a lid is also high.

When providing the female screw part in the upper projection grasping part, even if a problem should arise in a nut part, the nut part can be easily replaced from the upper part.

If the hook which can lock a lid is provided further and the trough perimeter has a little gap, a lid can be locked by the bolt and the hook and a trough and a lid can more certainly be fixed.

The 2nd invention is a fixing method of the trough which has a bottom and side wall parts provided in both sides of said bottom, and a lid put on the upper opening of said trough using the fixing bracket, wherein a projection part is formed outward in the both sides of said side wall parts near the upper end of said trough; said fixing bracket has upper and lower projection grasping parts for grasping the said projection part from the upper and lower sides, a connecting part which connects said upper and lower projection grasping parts, and the nut part provided in at least one part of said projection grasping part; a positioning lug projected to the inside is formed at least at one of insides of said upper and/or lower projection grasping parts in said fixing bracket, and a slot is formed in the fitting up direction of said fixing bracket at the part corresponding to the said positioning lug of said projection part of said trough; from the both sides of said projection part, said positioning lug is inserted along said slot, and said fixing bracket is attached to said projection part of said trough; and a bolt is provided and penetrates said lid from the upper part of said lid where the said lid is closed, and said lid is fixed to said trough by fixing said bolt to said nut part. Said nut part is provided at least in the undersurface of said lower projection grasping part, or upper surface of said upper projection grasping part.

According to the 2nd invention, fixing operation of a trough and a lid can be performed only from the upper part of a trough, it is excellent in workability, and very high fixed strength of trough and lid can be obtained.

### Advantageous Effect of the Invention

The present invention provides fixing structure of a trough and a lid etc. that can be used even if concrete is poured around, and fixed strength of a trough and a lid is very high, it is excellent in workability, and it is hard to break.

### Brief Description of the Figures

Fig. 1 is a decomposed perspective view showing fixing structure of a trough and a lid 1 concerning the present invention.
Fig. 2 is an assembly perspective view showing fixing structure of a trough and a lid 1 concerning the present invention.
Fig. 3 (A) is an upper part perspective view of fixing bracket 7, and (B) is a lower part perspective view of fixing bracket 7.
Fig. 4 (A) is a top view of fixing bracket 7, (B) is a C-C line sectional view of (A), and (C) is a D-D line sectional view of (A).
Fig. 5 is a figure showing mounting instruction of fixing bracket 7.
Fig. 6 is a figure showing fixing structure of a trough and a lid 1, and is an A-A line sectional view of Fig. 2.
Fig. 7 is a figure showing fixing structure of a trough and a lid 1, and is a B-B line sectional view of Fig. 2.
Fig. 8 (A) is a decomposed perspective view of fixing bracket 30, and (B) is an assembly perspective view of fixing bracket 30.
Fig. 9 is a figure showing fixing structure of a trough and a lid 1a
Fig. 10 is a figure showing fixing structure of a trough and a lid 1b
Fig.11 is a perspective view of fixing bracket 40.
Fig. 12 (A) is a top view of fixing bracket 7a, and (B) is an F-F line sectional view of (A).
Fig. 13 (A) is a top view of fixing bracket 7b, and (B) is a G-G line sectional view of (A).
Fig. 14 (A) is a top view of fixing bracket 7c, and (B) is an H-H line sectional view of (A).
Fig. 15 (A) is a top view of fixing bracket 7d, and (B) is an I-I line sectional view of (A).
Fig. 16 is a figure showing an embodiment of head shape of a bolt.

### Description of Embodiments

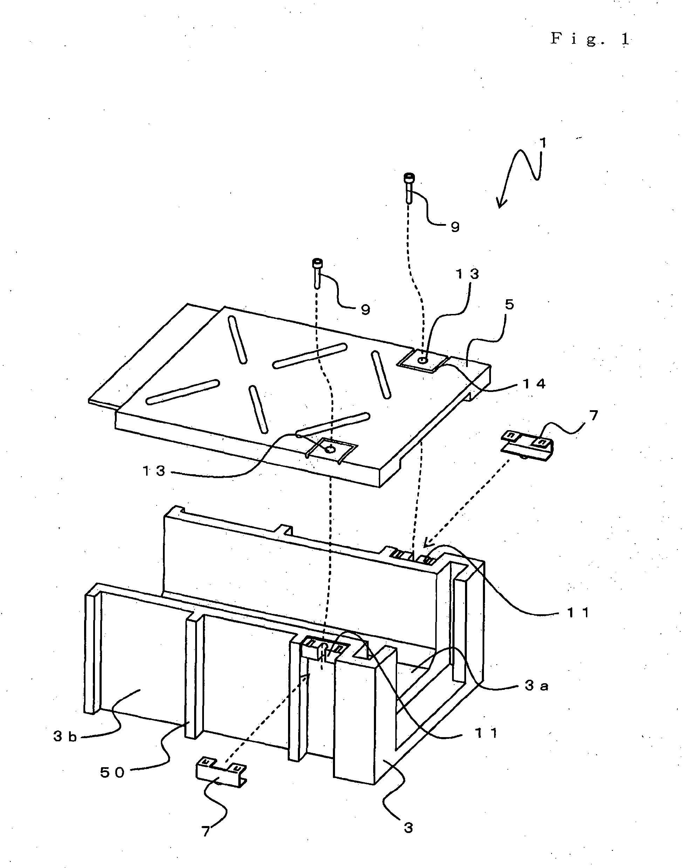

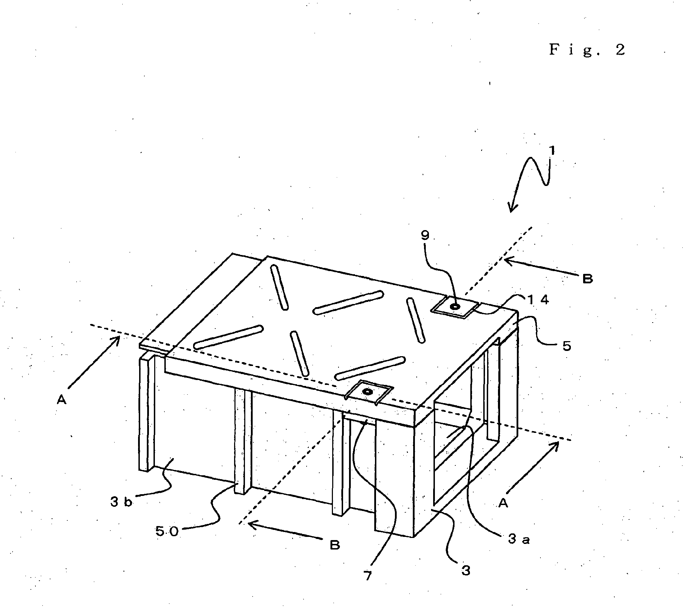

Hereafter, an embodiment of the present invention is described, referring to figures. Fig. 1 is a decomposed perspective view showing fixing structure of a trough and a lid 1 concerning the present invention, and Fig. 2 is an assembly perspective view showing fixing structure of a trough and a lid 1 concerning the present invention.

Fixing structure of a trough and a lid 1 mainly comprises trough 3, lid 5, fixing bracket 7 and the like. Trough 3 is a member having an approximately U character-like section and comprising a bottom 3a, side wall parts 3b, which is approximately perpendicular to the bottom 3a and provided on a both sides of bottom 3a, and so on. Size of trough 3 can be suitably chosen with a place constructed, a cable and the like. If there are certain strength and endurance as a material of trough 3, it does not specify, but when construction easiness, such as cost and a weight saving, is taken into consideration, a product made of resin is preferable, and a recycled plastic etc. which consists of a waste plastic and a flame retarding material can be used. Shape of trough 3 is not restricted to the example of Fig. 1.

Lid 5 is provided in an upper opening of trough 3. After a cable and the like are placed by part surrounded by bottom 3a and side wall parts 3b, lid 5 is attached and fixed to the trough upper part so that an opening of trough 3 may be closed.

Projection part 11 is formed in the upper part (the near upper end of trough 3) of side wall parts 3b towards the both directions of the outsides from the external surface of side wall parts 3b. Projection part 11 is a part to which fixing bracket 7 mentioned later is attached. Projection part 11 is the projection formed on a both side of trough 3, and has strength required fixing a lid. Details of projection part 11 are mentioned later. Reinforcing rib 50 may be provided in the direction perpendicular to trough bottom 3a at side wall part 3b of the trough. Fig. 1 shows an example at the case of providing reinforcing rib 50.

Bolt hole 13 is established in lid 5. When lid 5 is attached to trough 3, bolt hole 13 is established in a position corresponding to fixing bracket 7 (projection part 11).

The fixing method of trough 3 and lid 5 is as follows. First, slide insertion of the fixing bracket 7 is carried out from both sides to projection part 11 of trough 3, and fixing bracket 7 is fixed to projection part 11. Subsequently, lid 5 is put on trough 3 and bolt 9 is inserted from bolt hole 13. Bolt 9 is fixed with fixing bracket 7, and lid 5 is fixed to trough 3.

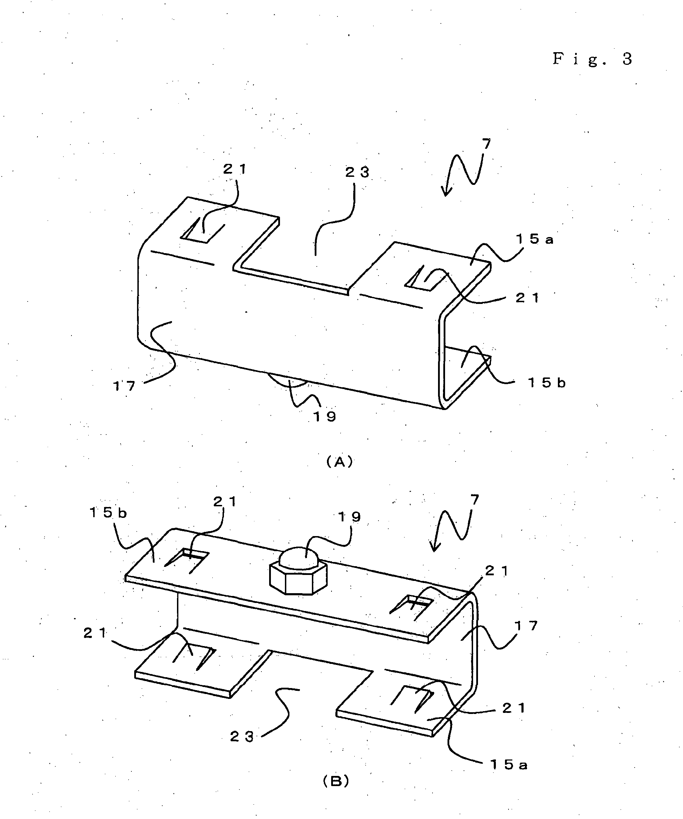

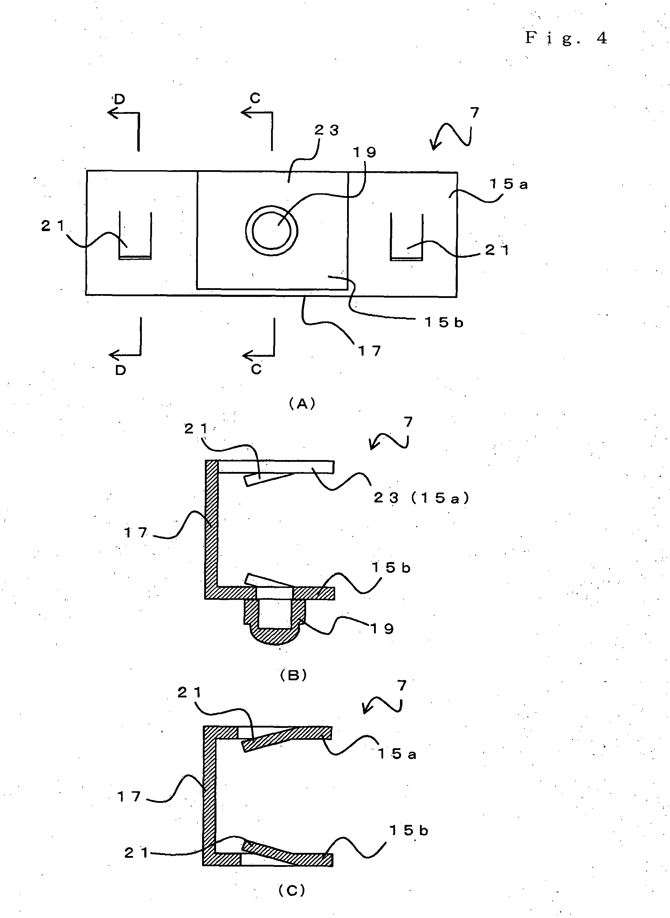

Next, fixing bracket 7 is explained. Fig. 3 (A) is an upper part perspective view of fixing bracket 7, and Fig. 3 (B) is a lower part perspective view of fixing bracket 7. Fig. 4 (A) is a top view of fixing bracket 7, Fig. 4 (B) is a C-C line sectional view of Fig. 4 (A), and Fig. 4 (C) is a D-D line sectional view of Fig. 4 (A).

Upper projection grasping part 15a and lower projection grasping part 15b are formed in approximately parallel at an upper part and lower part of fixing bracket 7, respectively, and connecting part 17 is formed in order to connect upper projection grasping part 15a and lower projection grasping part 15b. Hence, fixing bracket 7 has an approximately horseshoe-shaped section opening in one direction. The tip part (the side opposite to connecting part 17) of upper projection grasping part 15a and lower projection grasping part 15b can obtain grasp force against projection part 11 by elastic deformation of a connecting part and the like, by forming so that a their distance may become nearer than the length of a connecting part slightly.

Cutout 23 is formed in an approximately center part of upper projection grasping part 15a. Cutout 23 is a part where a bolt penetrates. Cutout 23 may be formed in the whole central part of upper projection grasping part 15a in a rectangle shape as illustrated, or they may be U slot and a penetration hole, as long as a bolt can penetrate.

Nut part 19 is joined to the undersurface (upward in Fig. 3 (B)) of lower projection grasping part 15b. Preferably, nut part 19 is the domed cap nut as illustrated. Nut part 19 is being fixed to lower projection grasping part 15b, for example, by welding. As shown in Fig.4, the hole where a bolt can penetrate is formed in the joined part of the lower projection grasping part 15b and the nut part 19, and the nut part 19 is possible to screw together with the bolt inserted from the cutout 23 side.

Positioning lug 21 is formed in each of upper projection grasping part 15a and lower projection grasping part 15b. Positioning lug 21 determines the position of fixing bracket 7 to the direction of an axis of trough 3, when a fixing bracket is attached to trough 3 (projection part 11).

As shown in Fig. 4 (B), a part is bent to the inside and positioning lug 21 is formed so that it may protrude in the inside direction of each of upper projection grasping part 15a and lower projection grasping part 15b. Positioning lug 21 can heighten the grasp force against projection part 11 of fixing bracket 7 by the elastic deformation of positioning lug 21 with the positioning effect because it is bent and formed in an inner direction, as illustrated.

The shape and arrangement of positioning lug 21 are not restricted to the example shown in the Fig. 4 and the like. As long as it is the projection protruded to the inside of upper and lower projection grasping parts, any kind of shape may be sufficient, and it may be formed only in either one of upper projection grasping part 15a or a lower projection grasping part 15b.

As a material of fixing bracket 7, it is preferable that some elastic deformation is possible, it is excellent in corrosion resistance and strength, and it is easy to manufacture. For example, stainless steel, nickel plated brass and the like can be used. Nut part 19 and other parts may be the same materials, or may be different kinds of materials. Although based on the shape of the trough installed, for example, fixing bracket 7 is obtained by press molding of the 0.8 mm or more-thick plate. From a viewpoint of insertion to a projection part, 2.5 mm or less is preferable. The height (distance of upper projection grasping part 15a and lower projection grasping part 15b) of connecting part 17 is about 10 mm - 40 mm. Since the height of a connecting part is almost the same as the height of a projection part, when the strength of a projection part is taken into consideration, more than 10 mm is preferable here, but about 40 mm may be sufficient as a maximum. Although there is no reason in particular positively to restrict the upper limit, not only a resin material but also the material of a fixing bracket becomes of no use, because a fixing bracket will become large if it becomes thick. As height of a connecting part, 15 to 25 mm is preferable.

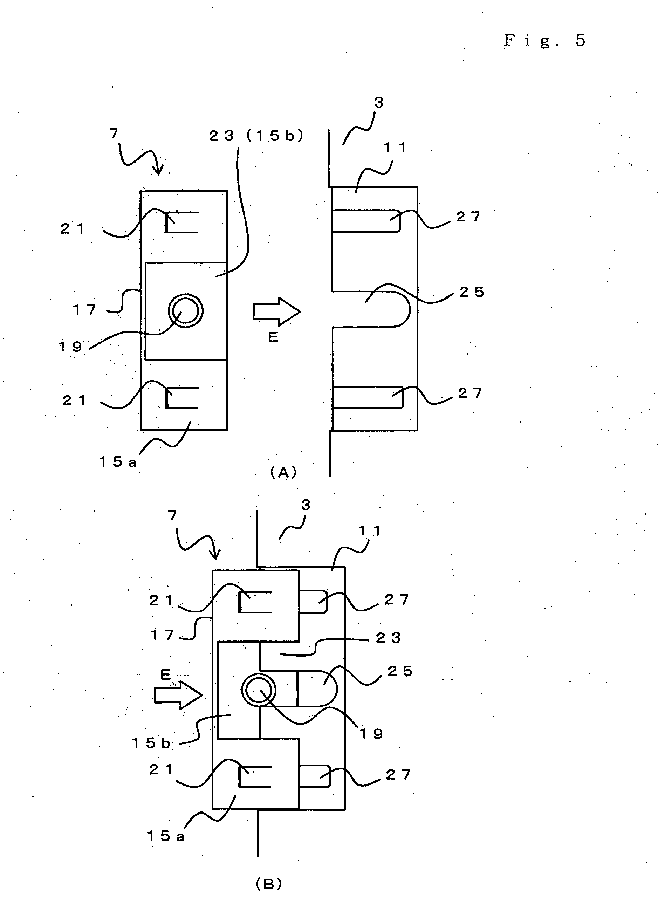

Next, the fitting up method of fixing bracket 7 to projection part 11 is explained. Fig. 5 is a top view showing the fitting up method of fixing bracket 7 to projection part 11. Projection part 11 is formed with the width almost the same as or a little larger than that of fixing bracket 7, and is the thickness which can insert fixing bracket 7. Bolt penetration part 25 is formed in the approximately center of projection part 11. Bolt penetration part 25 is a cutout part with slightly larger width than the bolt inserted. The shape of bolt penetration part 25 may not be restricted to the example of a figure, and may be a penetration hole.

Slot (hollow) 27 is formed in the both sides of bolt penetration part 25 of projection part 11. The position of slot (hollow) 27 corresponds with the position of positioning lug 21 of fixing bracket 7. Thus, a projection part will be grasped by not only the elastic grasp force of the tip part of upper projection grasping part 15a and lower projection grasping part 15b but also the elastic grasp force of positioning lug 21 in fixing bracket 7 of this embodiment.

First, as shown in Fig. 5 (A), nut part 19 is turned down (cutout 23 is turned up), and fixing bracket 7 is inserted in projection part 11 from the side of trough 3 (the direction of arrow E in the figure). In this case, fixing bracket 7 is put on projection part 11 so that positioning lug 21 may fit into slot (hollow) 27.

Fig. 5 (B) is a figure showing the state in the middle of putting fixing bracket 7 to projection part 11. If fixing bracket 7 is inserted in projection part 11, in order that positioning lug 21 may fit into slot (hollow) 27, the fixed position of fixing bracket 7 is determined certainly (to the direction of an axis of trough 3) to projection part 11. When fixing bracket 7 is attached to projection part 11, fixing bracket 7 is certainly fixed to projection part 11 by the elastic deformation of connecting part 17, upper projection grasping part 15a, and lower projection grasping part 15b.

If fixing bracket 7 is completely inserted to projection part 11, bolt penetration part 25 of projection part 11, cutout 23 and nut part 19 of fixing bracket 7 will be located in an approximately straight line in the perpendicular direction.

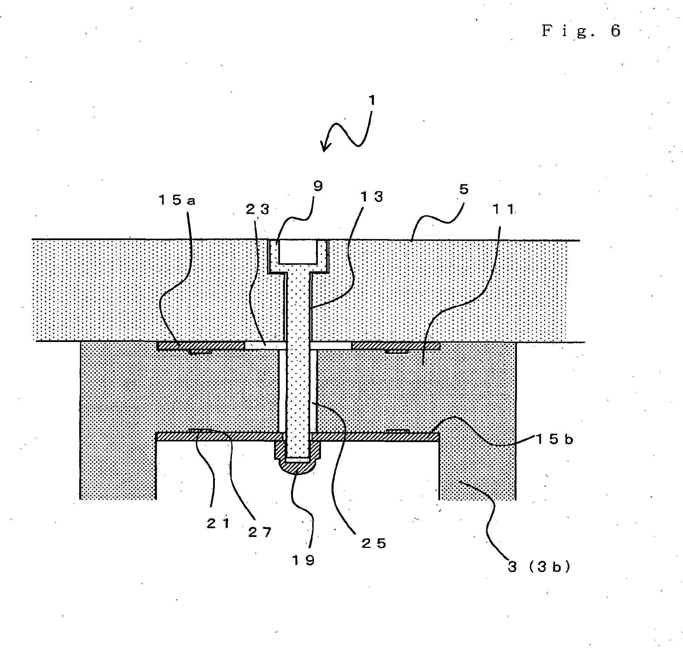

Fig. 6 is a figure showing the state of trough 3 and lid 5 fixed, using fixing bracket 7, and is an A-A line sectional view of Fig. 2. Positioning lug 21 of fixing bracket 7 fits into slot (hollow) 27 of projection part 11 as above-mentioned. In this state, bolt hole 13 of lid 5, bolt penetration part 25 of projection part 11, cutout 23 of fixing bracket 7, and nut part 19 are located in an approximately straight line in the perpendicular direction.

Bolt 9 is inserted from the bolt hole 13 upper part, penetrates lid 5 and projection part 11, and screws together with nut part 19 of the lower part (undersurface of lower projection grasping part 15b) of fixing bracket 7. It is preferred to provide the locking part which fell by one step in a bolt hole so that the head of a bolt may not protrude above the lid upper surface as shown in Fig. 6. As illustrated, in the state of fixing bracket 7 attached to projection part 11, it is preferable for the upper surface (undersurface of lid 5) of trough 3 and the upper surface of fixing bracket 7 to be approximately in agreement.

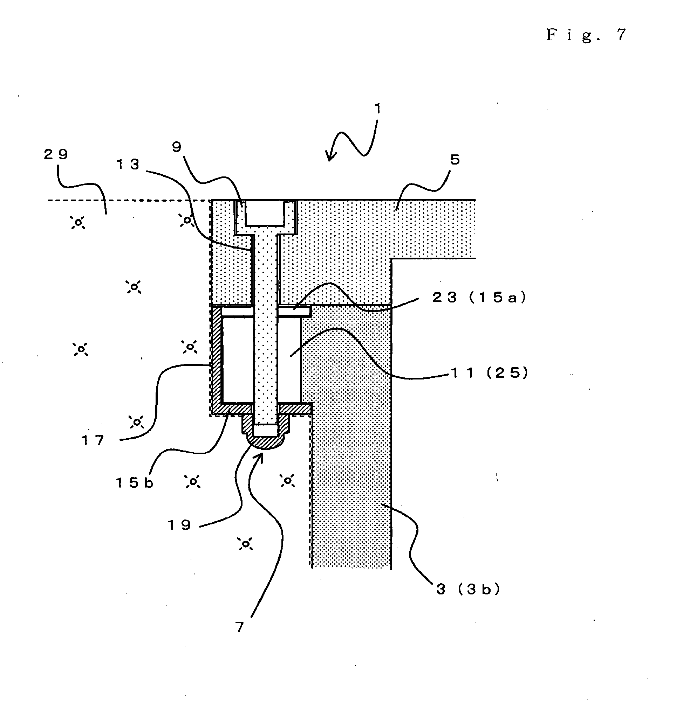

Similarly, Fig. 7 is a figure showing the state where trough 3 and lid 5 were fixed, using fixing bracket 7, and is a B-B line sectional view of Fig. 2. In Fig. 7, concrete 29 is poured around trough 3 and lid 5 (left side in the figure), for example. Hence, trough 3 is laid underground and the gap which can insert the conventional metal fittings etc. is not formed in the circumference of trough 3. Even if it is in such a state, it is possible to open and close lid 5 with bolt 9.

According to fixing structure of a trough and a lid 1 concerning a 1st embodiment, when concrete is poured around (or when a trough is put side by side), in a part which does not have a gap in the side of a trough, lid 5 can be easily fixed to trough 3. Since nut part 19 is fixed to lower projection grasping part 15b by welding and the like, even if bolt 9 is fastened tightly, nut part 19 does not rotate or fall out.

Since fixing of trough 3 and lid 5 is performed by bolt 9 and nut part 19, very high fixed strength can be obtained. If a domed cap nut is used for nut part 19, even if concrete 29 is poured around installed trough 3 to which fixing bracket 7 was attached, concrete will not infiltrate into nut part 19.

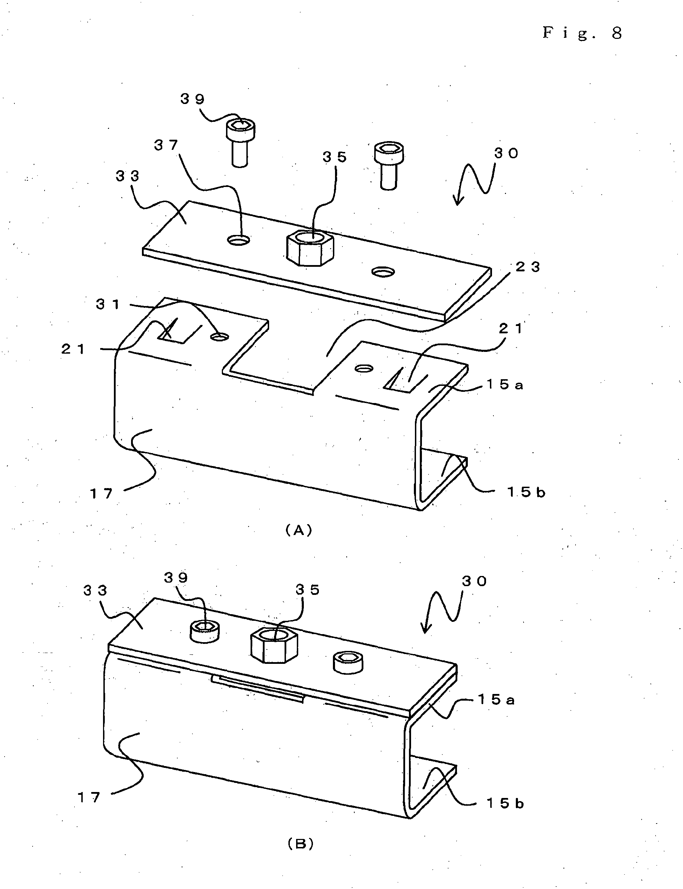

Next, fixing bracket 30 concerning a 2nd embodiment is explained. Fig. 8 (A) is a decomposed perspective view showing fixing bracket 30, and Fig. 8 (B) is an assembly perspective view showing fixing bracket 30. In following embodiments, about the composition which performs the same function as fixing bracket 7, the same symbols as Fig. 3 and the like are attached and the repeated explanation is omitted.

Fixing bracket 30 differs from fixing bracket 7 in that plate member 33 to which nut part 35 was fixed is fixed to upper projection grasping part 15a. Plate member 33 is tabular and nut part 35 is fixed in the center by welding and the like. Nut part 35 can screw together with a bolt from the upper part.

Bolt hole 37 is formed in the both sides of nut part 35 of plate member 33, and bolt hole 37 is a part where bolt 39 penetrates. Female screw part 31 is formed in the part corresponding to bolt hole 37 in upper projection grasping part 15a. Female screw part 31 can be screwed together with bolt 39.

As shown in Fig. 8 (B), plate member 33 is fixed with bolt 39 on upper projection grasping part 15a. Nut part 35 may be provided in the undersurface of plate member 33, and needs to provide a hole in the part corresponding to nut part 35 of plate member 33 in this case.

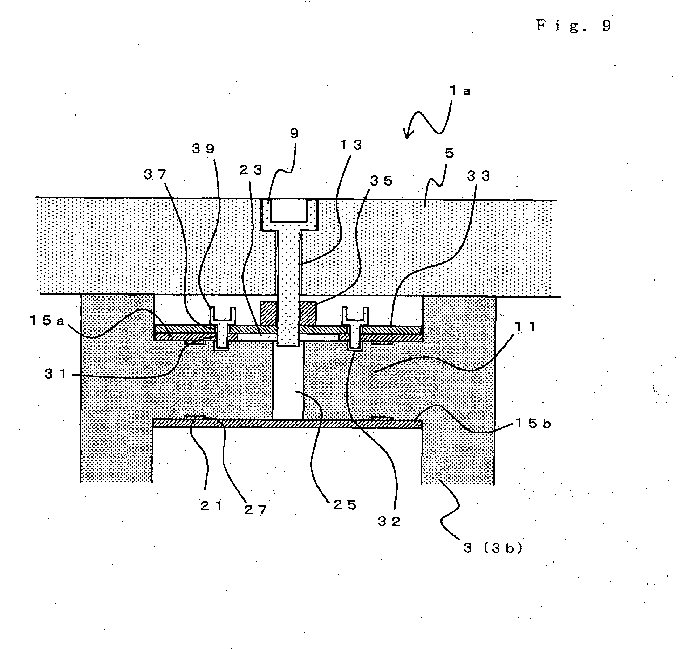

Fig. 9 is a sectional view corresponding to Fig. 6 showing the state where lid 5 and trough 3 were fixed, using fixing bracket 30. Plate member 33 is attached above fixing bracket 30 with bolt 39. Bolt 39 is fixed to female screw part 31 formed in upper projection grasping part 15a. Bolt 9 inserted in bolt hole 13 of lid 5 penetrates lid 5, and is screwed together with and fixed to nut part 35.

In this case, projection part 11 is formed in positions low by thickness, such as nut part 35, at least to the trough upper surface so that nut part 35 and the head of bolt 39 may not interfere with the undersurface of lid 5. Hence, the formation position (upper surface of a projection part) of projection part 11 is lowered by the height corresponding to nut part 35 and bolt 39 from the upper surface of trough 3.

If the penetration hole of a bolt is formed in upper projection grasping part 15a so that bolt 9 can penetrate upper projection grasping part 15a, the tip of bolt 9 will not interfere with upper projection grasping part 15a. In this embodiment, bolt penetration part 25 may not necessarily be required, and the simple concave part for avoiding interference with a bolt 9 tip may be sufficient, and it can also be eliminated completely.

In order to avoid interference with the tip of bolt 39, and projection part 11, it is preferable to form concave part 32 in the position corresponding to bolt 39 in the upper surface of projection part 11.

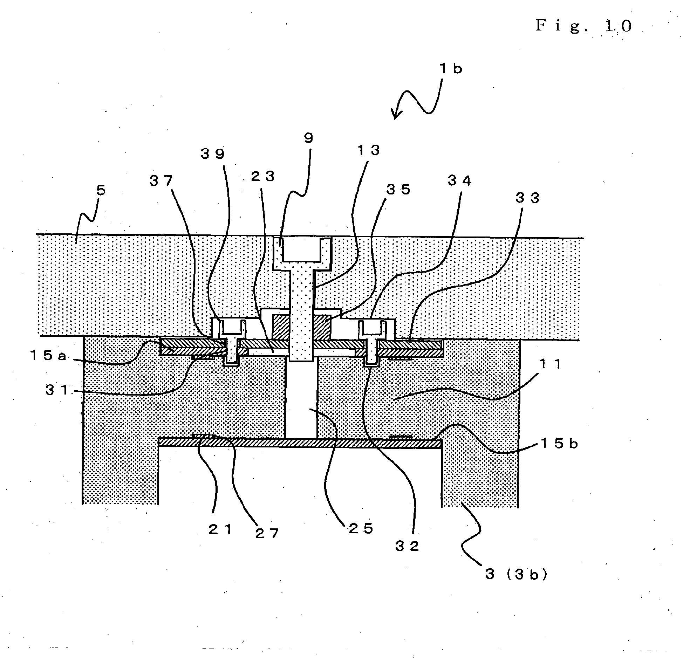

Fig. 10 is a sectional view concerning other embodiments which fixed lid 5 and trough 3 using fixing bracket 30. As shown in Fig. 10, concave part 34 which avoids interference with nut part 35 and bolt 39 may be formed in the back of lid 5 by the height corresponding to nut part 35 and bolt 39. Also by concave part 34, interference of the undersurface of lid 5, and nut part 35 and the head of bolt 39 can be prevented.

If female screw part 31 is formed in lower projection grasping part 15b and the length of the shank of bolt 39 is made into length comparable as connecting part 17, plate member 33 can be fixed with lower projection grasping part 15b with bolt 39. In this case, the penetrated part where bolt 39 penetrates should be provided in projection part 11, upper projection grasping part 15a and the like. By doing in this way, even if a bolt is tightly fastened to nut part 35, upper projection grasping part 15a does not deform and loosen the fixing.

According to fixing bracket 30 concerning a 2nd embodiment, it can use like fixing bracket 7 and the same effect can be performed. Since only nut part 35 (plate member 33) can be replaced from the upper part even when a nut part should be damaged, replacement work is easy.

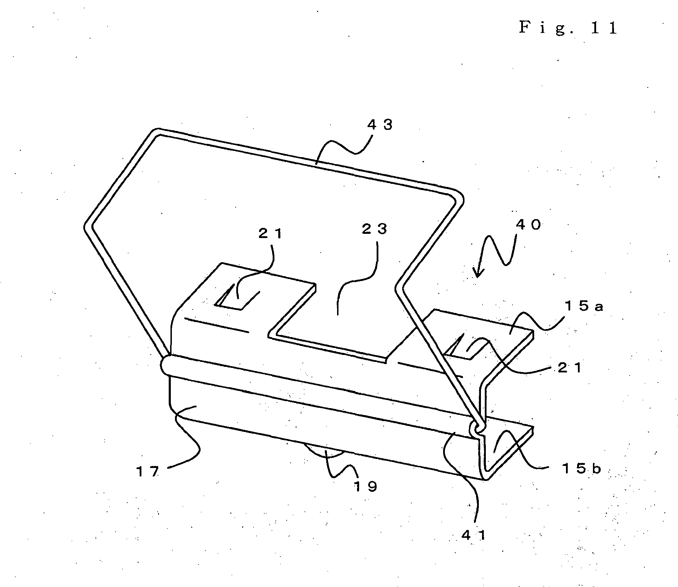

Next, fixing bracket 40 concerning a 3rd embodiment is explained. Fig. 11 is a perspective view showing fixing bracket 40. Fixing brackets 40 differ in that hook 43 is provided to fixing bracket 7.

Hook suspending part 41 is formed in connecting part 17. Hook suspending part 41 is a part which is formed so that it may bulge on the outside of connecting part 41, and is attached so that rotation of hook 43 is possible. Hook 43 is, for example, the metallic member whose tip is bent almost perpendicularly, and can lock lid 5. Hence, if hook 43 is located in substantial verticality from hook suspending part 41, the tip of hook 43 is placed so that lid 5 is pressed down from the upper part.

For example, buckle slot 14 (Fig. 1 and Fig. 2) is formed in the position corresponding to fixing bracket 40 of lid 5, by closing lid 5 and rotating hook 43 up where fixing bracket 40 is attached to projection part 11, the tip of hook 43 can fit into buckle slot 14, and lid 5 can be certainly fixed.

According to fixing bracket 40 concerning a 3rd embodiment, the same effect as fixing bracket 7 can be acquired. When there is no gap in the circumference of trough 3, lid 5 is fixed using nut part 19, when a gap exists in the circumference, after placing a cable, lid 5 can be fixed by hook 43. Hence, it is applicable to the trough in all installation locations with one fixing bracket. Where concrete and the like are poured around, fixing bracket 40 may be attached to a trough after removing hook 43 beforehand, and the whole hook 43 may be laid underground with concrete.

In order to fill up the circumference of trough 3 with gravel and the like, after fixing lid 5 by hook 43, the circumference of trough 3 is filled up with gravel and the like. To open lid 5, it is necessary to remove some surrounding gravels in the rotation movable range of hook 43, but lid 5 can more certainly be fixed. Especially when thinking security as important, both fixing of a lid with a bolt and a nut and fixing of the lid by hook can be performed. Especially when thinking security as important, both fixing of a lid with a bolt and a nut and fixing of the lid by hook are performed.

As mentioned above, although the embodiment of the invention was described referring to the attached figures, the technical scope of the present invention is not influenced by the embodiment mentioned above. For a person skilled in the art, in the category of the technical idea indicated to the claim, it will be clear that he can think out for the various modifications or correction, and it will be understood that they naturally belong to the technical scope of the present invention also about them.

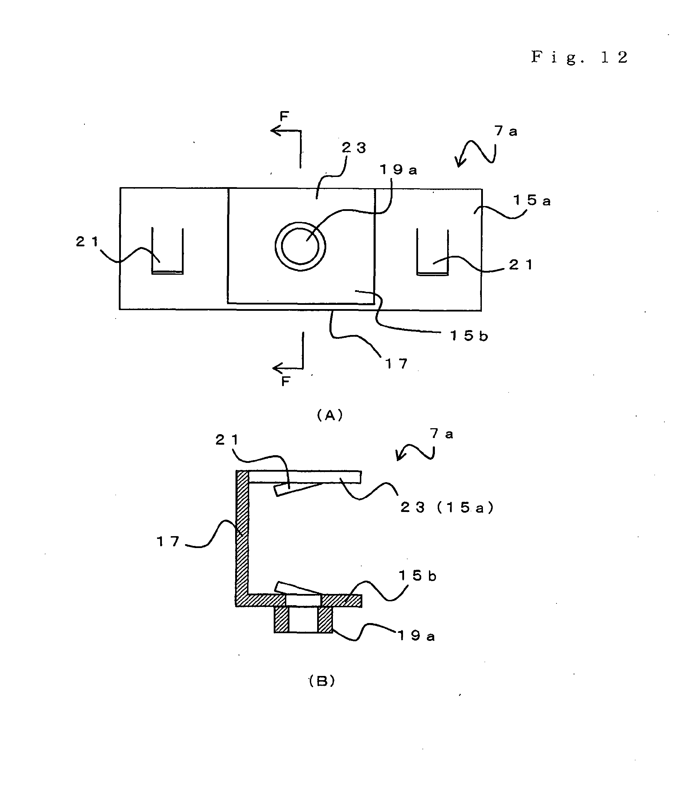

For example, not a domed cap nut but the usual nut may be used as nut part 19 of fixing bracket 7 shown in Fig. 3 and the like. Fig. 12 is a figure showing a reference example that does not fall within the scope of the claims in which a fixing bracket 7a with which usual nut (penetration nut) 19a is provided, Fig. 12 (a) is a top view and Fig. 12 (b) is an F-F line sectional view of Fig. 12 (a). Fixing bracket 7a can be used like fixing bracket 7. Incursion of concrete at the time of pouring of concrete can be prevented by putting the cap made of an elastic material on nut part 19a, or applying grease with high viscosity to a nut.

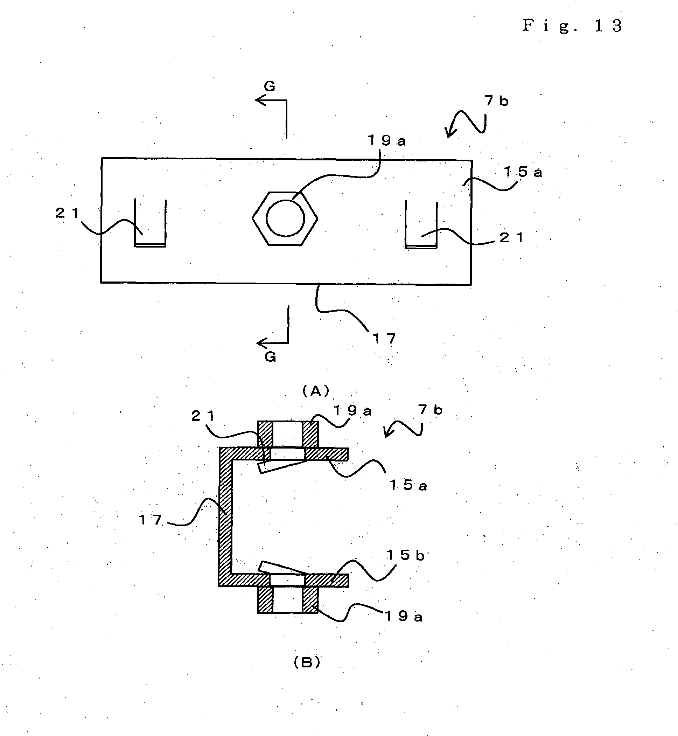

Fixing bracket 7b which provided nut part 19a (19) on both of upper surface of upper projection grasping part 15a and undersurface of lower projection grasping part 15b can also be used. Fig. 13 is a figure showing fixing bracket 7b on which nut part 19a was provided upward and downward, Fig. 13 (a) is a top view and Fig. 13 (b) is a G-G line sectional view of Fig. 13 (a). Fixing bracket 7b can be used like fixing bracket 7. Nut part 19 which is a domed cap nut may be applied to downward nut part 19a.

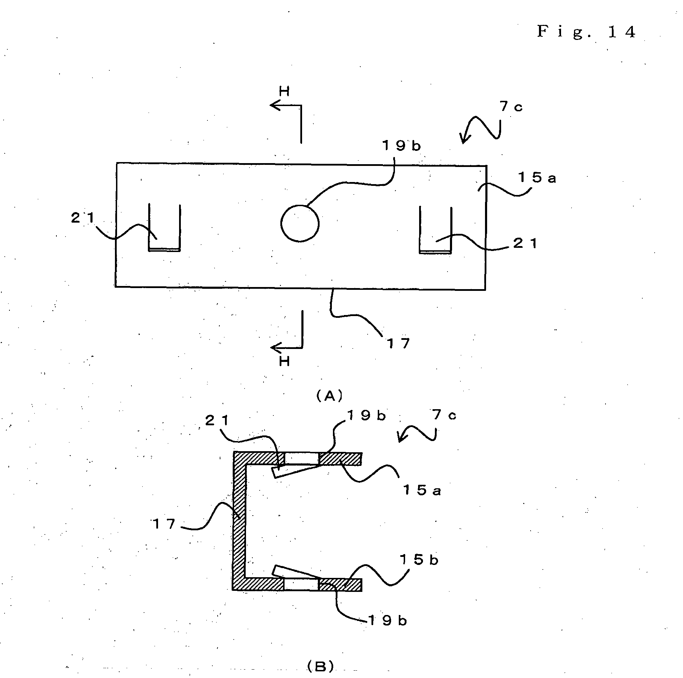

Fixing bracket 7c where the nut part is directly formed on upper projection grasping part 15a and lower projection grasping part 15b can also be used. Fig. 14 is a figure showing fixing bracket 7c where a female screw part is provided on upper projection grasping part 15a and lower projection grasping part 15b, and nut part 19b is formed, Fig. 14 (a) is a top view and Fig. 14 (b) is a H-H line sectional view of Fig. 14 (a). Nut part 19b is a female screw part formed in upper projection grasping part 15a and lower projection grasping part 15b, and can be screwed together with bolts 9 (Fig. 1 etc.). Fixing bracket 7c can be used like fixing bracket 7. Nut part 19b may be formed only in the upper projection grasping part 15a.

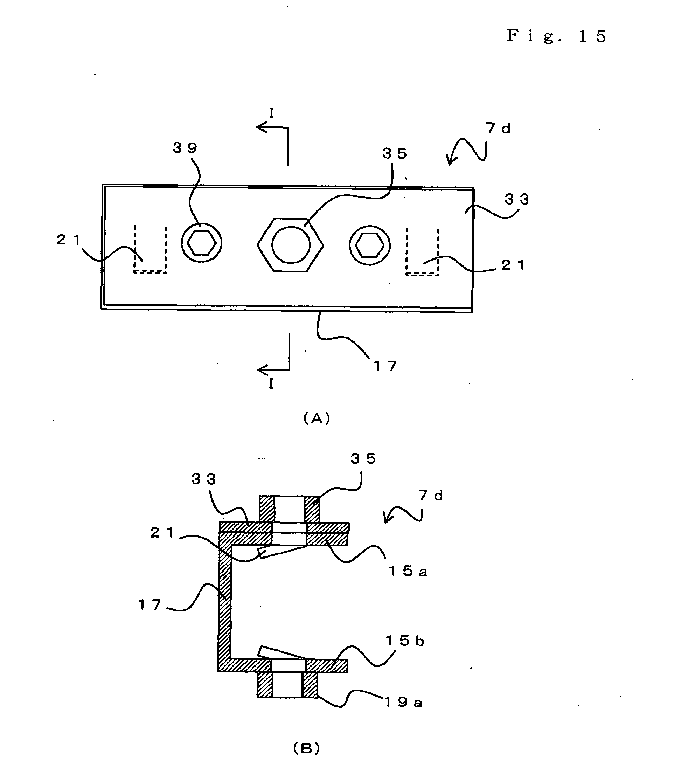

Fixing bracket 7d with which nut part 19a is provided in lower projection grasping part 15b, and plate member 33 in which nut part 35 was fixed is provided in upper projection grasping part 15a can also be used. Fig. 15 is a figure showing fixing bracket 7d where nut part 19a is provided in lower projection grasping part 15b, and plate member 33 is joined with bolt 39 on upper projection grasping part 15a, Fig. 15 (a) is a top view and Fig. 15 (b) is an I-I line sectional view of Fig. 15 (a). The fixing method of plate member 33 and the like is the same as that of Fig. 8. The hole where a bolt can penetrate is formed in plate member 33, upper projection grasping part 15a, and lower projection grasping part 15b. Fixing bracket 7d can be used like fixing bracket 7. In the case where a nut part or a female screw part is provided in both upper projection grasping part 15a and lower projection grasping part 15b as shown in Fig. 13 to Fig. 15, A bolt may be inserted so that two nut parts or a female screw parts are penetrated, and only the nut part or female screw part formed in upper projection grasping part 15a near a lid can be fixed with a short bolt.

Instead of nut part 19a formed in lower projection grasping part 15b, nut part 19 which is a domed cap nut may be used, or nut part 19b where the female screw part is directly formed may be applied.

According to fixing bracket 7d, female screw part 31 which can detach and attach plate member 33 is beforehand provided in upper projection grasping part 15a, at the time of installation of a trough, and plate member 33 is removed, bolt 9 is fixed only by lower projection grasping part 15b, when nut part 19a of lower projection grasping part 15b is damaged, the fixing structure of lid 5 should also be repaired by attaching plate member 33 which has nut part 35 and bolt hole 37 to a fixing bracket.

Although dispositions of various nut parts and the like were explained, the most preferable structure is the structure where the nut part was formed in the lower projection grasping part 15b side at least. When the nut part was formed in the lower projection grasping part 15b side and bolt 9 is fastened from the upper part, in connection with the fastening of a bolt, lower projection grasping part 15b is forced strongly up (projection part side), and the grasp force against the projection part of the fixing bracket becomes strong.

By head shape of a bolt being made into the round shape where a bolt head can be buried in bolt hole 13 of lid 5, unless a tool is made to fit into the tool fitting part of a bolt head, bolt 9 cannot be rotated.

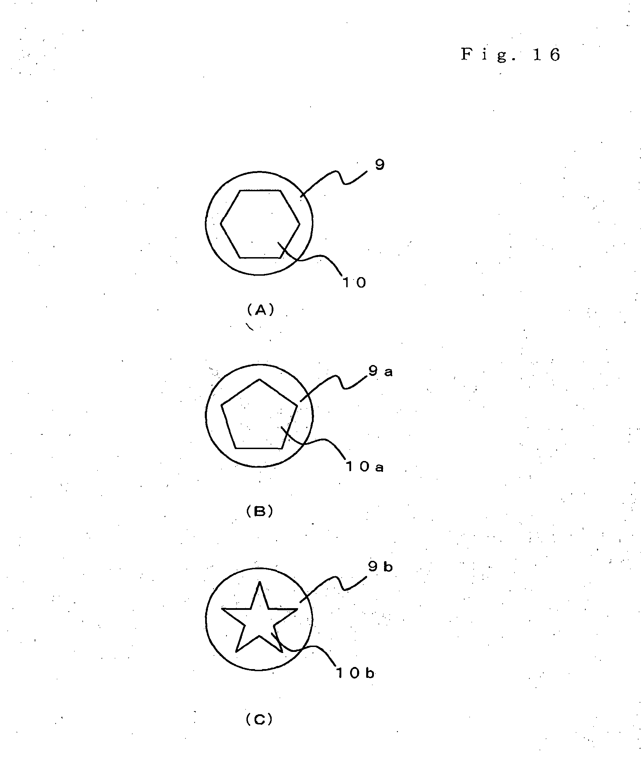

Fig. 16 is a figure showing the shape of the tool fitting part of the head of a bolt. If bolt 9 which has the usual hexagonal tool fitting part 10 is used as shown in Fig. 16 (a), bolt 9 can be rotated using the conventional hexagonal wrench.

On the other hand, as shown in Fig. 16 (b), bolt 9a which has a pentagonal tool fitting part 10a may be used, or, as shown in Fig. 16 (c), bolt 9b which has a star shaped tool fitting part 10b may be used. By making shape of a tool fitting part into the special shape instead of shapes, such as a hexagon, the usual plus or minus, specialized tools, such as a pentagon, are needed corresponding to a tool fitting part. Unless a specialized tool is used, since only a lid is not fixed, but removing a lid with a mischief and the like can be prevented, doing in this way is more preferred. The shape of a tool fitting part is not restricted to the example shown in Fig. 16.

By using the above fixing structures, since a place is hardly needed when placing a trough, two or more rows of the troughs can be placed in the state where they are approached or are close together.

### Reference Signs List

1: Fixing structure of a trough and a lid
3: Trough
3a: Bottom
3b: Side wall part
5: Lid
7, 7a, 7b, 7c, 7d, 30, 40: Fixing bracket
9: Bolt
10, 10a, 10b: Tool fitting part
11: Projection part
13: Bolt hole
14: Buckle slot
15a: Upper projection grasping part
15b: Lower projection grasping part
17: Connecting part
19, 19a, 19b: Nut part
21: Positioning lug
23: Cutout
25: Bolt penetration part
27: Slot (hollow)
29: Concrete
31: Female screw part
32: Concave part
33: Plate member
34: Concave part
35: Nut part
37: Bolt hole
39: Bolt
41: Hook suspending part
43: Hook
50: Reinforcing rib

## Claims

1. A fixing structure of a trough (3) which has a bottom (3a) and side wall (3b) parts provided in both sides of said bottom, and a lid (5) put on the upper opening of said trough using a fixing bracket (7), wherein
a projection part (11) is formed outward in the both sides of said side wall parts near the upper end of said trough;
a bolt penetration hole (25) is formed in said projection part;
said fixing bracket has upper and lower projection grasping parts (15a, 15b) for grasping said projection part from the upper and lower sides, and a connecting part (17) which connects said upper and lower projection grasping parts;
a domed cap nut (10) is fixed to the lower side of said lower projection grasping part;
a positioning lug (21) projected to the inside is formed at least at one of insides of said upper and lower projection grasping parts (15b) of said fixing bracket;
a slot (27) is established in the position corresponding to said positioning lug of said fixing bracket in said projection part of said trough;
said positioning lug is inserted in said slot, and said fixing bracket is attached to said trough from both sides so that said projection part is grasped by said upper and lower projection grasping parts;
and
a bolt (9) is provided and penetrates said lid from the upper part of said lid where said lid is closed, and said lid is fixed to said trough by fixing said bolt to said domed cap nut.

2. A fixing structure of a trough (3) which has a bottom (3a) and side wall (3b) parts provided in both sides of said bottom, and a lid (5) put on the upper opening of said trough using the fixing bracket (7), wherein
a projection part (11) is formed outward in the both sides of said side wall parts near the upper end of said trough;
said fixing bracket has upper and lower projection grasping parts (15a, 15b) for grasping said projection part from the upper and lower sides, and a connecting part (17) which connects said upper and lower projection grasping parts;
a nut part (35) is fixed to the upper surface of said upper projection grasping part;
a positioning lug (21) projected to the inside is formed at least at one of insides of said upper and lower projection grasping parts of said fixing bracket;
a slot (27) is established in the position corresponding to said positioning lug of said fixing bracket in said projection part of said trough;
said positioning lug is inserted in said slot, and said fixing bracket is attached to said trough from both sides so that said projection part is grasped by said upper and lower projection grasping parts;
a bolt (9) is provided and penetrates said lid from the upper part of said lid where said lid is closed, and said lid is fixed to said trough by fixing said bolt to said nut part; and
a concave part for avoiding interference with said bolt is formed in the position corresponding to said bolt in the upper surface of said projection part.

3. The fixing structure of a trough and a lid according to any one of Claim 1 and 2, wherein said trough is laid in the ground so that the upper surface of the trough, when the lid is closed, is approximately matched with the surrounding ground height.

4. The fixing structure of a trough and a lid according to claim 2, wherein said nut part (35) is a female screw part formed in said upper projection grasping part (15a).

5. The fixing structure of a trough and a lid according to claim 2, wherein said nut part is joined to a plate member (33) and said plate member to which said nut part is joined is attached to said upper projection grasping part (15a) with a bolt (39).

6. The fixing structure of a trough and a lid according to any one of Claims 1 and 2, wherein a hook (43) which can lock said lid part from the outside is formed in said connecting part.

7. A fixing method of a trough (3) which has a bottom (3a) and side wall (3b) parts provided in both side parts of said bottom, and a lid (5) put on the upper opening of said trough using the fixing bracket (7), wherein
a projection part (11) is formed outward in the both sides of said side wall parts near the upper end of said trough;
a bolt penetration hole is formed in said projection part;
said fixing bracket has upper and lower projection grasping parts (15a, 15b) for grasping the said projection part from the upper and lower sides, a connecting part (17) which connects said upper and lower projection grasping parts, and a domed cap nut (19) provided in the lower side of said lower projection grasping part (15b);
a positioning lug (21) projected to the inside is formed at least at one of insides of said upper and/or lower projection grasping parts of said fixing bracket, and a slot (27) is formed in the fitting up direction of said fixing bracket at the part corresponding to the said positioning lug in said projection part of said trough;
from the both sides of said projection part, said positioning lug is inserted along said slot, and said fixing bracket is attached to said projection part of said trough; and
concrete is poured outside of said trough;
a bolt (9) is provided and penetrates said lid from the upper part of said lid where the said lid is closed, and said lid is fixed to said trough by fixing said bolt to said domed cap nut.

8. A fixing method of a trough (3) which has a bottom (3a) and side wall (3b) parts provided in both side parts of said bottom, and a lid (5) put on the upper opening of said trough using the fixing bracket (7), wherein
a projection part (11) is formed outward in the both sides of said side wall parts near the upper end of said trough;
said fixing bracket has upper and lower projection grasping parts (15a, 15b) for grasping the said projection part from the upper and lower sides, a connecting part (17) which connects said upper and lower projection grasping parts, and a nut part (35) provided in the upper surface of said upper projection grasping part;
a concave part for avoiding interference with a bolt which screws with said nut part is formed in the position corresponding to said bolt in upper surface of said projection part;
a positioning lug (21) projected to the inside is formed at least at one of insides of said upper and/or lower projection grasping parts of said fixing bracket, and a slot (27) is formed in the fitting up direction of said fixing bracket at the part corresponding to the said positioning lug in said projection part of said trough;
from the both sides of said projection part, said positioning lug is inserted along said slot, and said fixing bracket is attached to said projection part of said trough;
concrete is poured outside of said trough; and
the bolt (9) is provided and penetrates said lid from the upper part of said lid where the said lid is closed, and said lid is fixed to said trough by fixing said bolt to said nut part.

## Patentansprüche

1. Fixierstruktur für einen Trog (3), der über einen Boden (3a) und Seitenwandteile (3b) verfügt, die an beiden Seiten des Bodens vorgesehen sind, und einen Deckel (5), der unter Verwendung eines Haltebügels (7) auf die obere Öffnung des Trogs gesetzt wird, wobei
ein Vorsprung (11) auf beiden Seiten der Seitenwandteile in der Nähe des oberen Endes des Trogs nach außen hin gebildet wird;
ein Schraubendurchführungsloch (25) in dem Vorsprung gebildet wird;
der Haltebügel über ein oberes und ein unteres Vorsprung-Greifteil (15a, 15b) zum Greifen des Vorsprungs von der oberen und der unteren Seite verfügt, und über ein Verbindungsteil (17), das das obere und das untere Vorsprung-Greifteil verbindet;
eine Hutmutter (10) an der unteren Seite des unteren Vorsprung-Greifteils angebracht ist;
eine Positionierungslasche (21), die zur Innenseite hin hervorsteht, an mindestens einer der Innenseiten des oberen und des unteren Vorsprung-Greifteils (15b) des Haltebügels gebildet wird;
ein Schlitz (27) in der Position gebildet wird, die mit der Positionierungslasche des Haltebügels im Vorsprung des Trogs korrespondiert;
die Positionierungslasche in den Schlitz eingeführt wird und der Haltebügel von beiden Seiten am Trog angebracht wird, sodass der Vorsprung vom oberen und unteren Vorsprung-Greifteil gegriffen wird;
und
eine Schraube (9) vorgesehen ist und den Deckel vom oberen Teil des Deckels aus durchdringt, wo der Deckel geschlossen ist, und der Deckel durch Befestigen der Schraube an der Hutmutter am Trog befestigt wird.

2. Fixierstruktur für einen Trog (3), der über einen Boden (3a) und Seitenwandteile (3b) verfügt, die an beiden Seiten des Bodens vorgesehen sind, und einen Deckel (5), der unter Verwendung des Haltebügels (7) auf die obere Öffnung des Trogs gesetzt wird, wobei
ein Vorsprung (11) auf beiden Seiten der Seitenwandteile in der Nähe des oberen Endes des Trogs nach außen hin gebildet wird;
der Haltebügel über ein oberes und ein unteres Vorsprung-Greifteil (15a, 15b) zum Greifen des Vorsprungs von der oberen und der unteren Seite verfügt, und über ein Verbindungsteil (17), das das obere und das untere Vorsprung-Greifteil verbindet;
ein Mutterteil (35) an der oberen Fläche des oberen Vorsprung-Greifteils angebracht ist;
eine Positionierungslasche (21), die zur Innenseite hin hervorsteht, an mindestens einer der Innenseiten des oberen und des unteren Vorsprung-Greifteils des Haltebügels gebildet wird;
ein Schlitz (27) in der Position gebildet wird, die mit der Positionierungslasche des Haltebügels im Vorsprung des Trogs korrespondiert;
die Positionierungslasche in den Schlitz eingeführt wird und der Haltebügel von beiden Seiten am Trog befestigt wird, sodass der Vorsprung vom oberen und unteren Vorsprung-Greifteil gegriffen wird;
eine Schraube (9) vorgesehen ist, und den Deckel vom oberen Teil des Deckels aus durchdringt, wo der Deckel geschlossen ist, und der Deckel durch Befestigen der Schraube am Mutterteil am Trog befestigt wird; und
ein konkaves Teil zur Vermeidung von Einwirkungen auf die Schraube in der Position gebildet wird, die mit der Schraube in der oberen Fläche des Vorsprungs korrespondiert.

3. Fixierstruktur für einen Trog und einen Deckel gemäß Anspruch 1 oder 2, wobei der Trog im Erdboden verlegt ist, sodass die obere Fläche des Trogs, wenn der Deckel geschlossen ist, in etwa zur Höhe des umgebenden Erdbodens passt.

4. Fixierstruktur für einen Trog und einen Deckel gemäß Anspruch 2, wobei das Mutterteil (35) ein Schraubenteil mit Innengewinde ist, das im oberen Vorsprung-Greifteil (15a) gebildet wird.

5. Fixierstruktur für einen Trog und einen Deckel gemäß Anspruch 2, wobei das Mutterteil mit einem Plattenelement (33) verbunden ist und das Plattenelement, mit dem das Mutterteil verbunden ist, mit einer Schraube (39) am oberen Vorsprung-Greifteil (15a) angebracht ist.

6. Fixierstruktur für einen Trog und einen Deckel gemäß Anspruch 1 oder 2, wobei ein Haken (43), der das Deckelteil von außen verriegeln kann, im Verbindungsteil gebildet wird.

7. Fixierverfahren für einen Trog (3), der über einen Boden (3a) und Seitenwandteile (3b) verfügt, die an beiden Seiten des Bodens vorgesehen sind, und einen Deckel (5), der unter Verwendung des Haltebügels (7) auf die obere Öffnung des Trogs gesetzt wird, wobei ein Vorsprung (11) auf beiden Seiten der Seitenwandteile in der Nähe des oberen Endes des Trogs nach außen hin gebildet wird;
ein Schraubendurchführungsloch in dem Vorsprung gebildet wird;
der Haltebügel über ein oberes und ein unteres Vorsprung-Greifteil (15a, 15b) zum Greifen des Vorsprungs von der oberen und der unteren Seite verfügt, über ein Verbindungsteil (17), das das obere und das untere Vorsprung-Greifteil verbindet, und über eine Hutmutter (19), die an der unteren Seite des unteren Vorsprung-Greifteils (15b) vorgesehen ist;
eine Positionierungslasche (21), die zur Innenseite hin hervorsteht, an mindestens einer der Innenseiten des oberen und/oder des unteren Vorsprung-Greifteils des Haltebügels gebildet wird, und ein Schlitz (27) in der Anbringungsrichtung des Haltebügels an dem Teil gebildet wird, das mit der Positionierungslasche im Vorsprung des Trogs korrespondiert;
die Positionierungslasche von beiden Seiten des Vorsprungs entlang des Schlitzes eingeführt wird und der Haltebügel am Vorsprung des Trogs angebracht wird; und
außerhalb des Trogs Beton gegossen wird;
eine Schraube (9) vorgesehen ist und den Deckel vom oberen Teil des Deckels aus durchdringt, wo der Deckel geschlossen ist, und der Deckel durch Befestigen der Schraube an der Hutmutter am Trog befestigt wird.

8. Fixierverfahren für einen Trog (3), der über einen Boden (3a) und Seitenwandteile (3b) verfügt, die an beiden Seiten des Bodens vorgesehen sind, und einen Deckel (5), der unter Verwendung des Haltebügels (7) auf die obere Öffnung des Trogs gesetzt wird, wobei ein Vorsprung (11) auf beiden Seiten der Seitenwandteile in der Nähe des oberen Endes des Trogs nach außen hin gebildet wird;
der Haltebügel über ein oberes und ein unteres Vorsprung-Greifteil (15a, 15b) zum Greifen des Vorsprungs von der oberen und der unteren Seite verfügt, über ein Verbindungsteil (17), das das obere und das untere Vorsprung-Greifteil verbindet, und über ein Mutterteil (35), das in der oberen Fläche des oberen Vorsprung-Greifteils vorgesehen ist;
ein konkaves Teil zur Vermeidung von Einwirkungen auf eine Schraube, die in das Mutterteil geschraubt wird, in der Position gebildet wird, die mit der Schraube in der oberen Fläche des Vorsprungs korrespondiert;
eine Positionierungslasche (21), die zur Innenseite hin hervorsteht, an mindestens einer der Innenseiten des oberen und/oder des unteren Vorsprung-Greifteils des Haltebügels gebildet wird und ein Schlitz (27) in der Anbringungsrichtung des Haltebügels an dem Teil gebildet wird, das mit der Positionierungslasche des Haltebügels im Vorsprung des Trogs korrespondiert;
die Positionierungslasche von beiden Seiten des Vorsprungs entlang des Schlitzes eingeführt wird und der Haltebügel am Vorsprung des Trogs angebracht wird;
außerhalb des Trogs Beton gegossen wird; und
die Schraube (9) vorgesehen ist und den Deckel vom oberen Teil des Deckels aus durchdringt, wo der Deckel geschlossen ist, und der Deckel durch Befestigen der Schraube am Mutterteil am Trog befestigt wird.

## Revendications

1. Structure de fixation d'une cuve (3) qui comprend un fond (3a) ainsi que des parois latérales (3b) prévues de part et d'autre du fond, et un couvercle (5) disposé sur l'ouverture du haut de la cuve au moyen d'un support de fixation (7), **caractérisée en ce que**
un élément en saillie (11) est formé vers l'extérieur dans les deux côtés des parois latérales près de l'extrémité au haut de la cuve;
un trou de pénétration pour boulon (25) est formé dans l'élément en saillie;
le support de fixation comporte des éléments d'accrochage en saillie du haut et du bas (15a, 15b) servant à saisir l'élément en saillie sur les côtés du haut et du bas, et un élément de raccordement (17) servant à raccorder les éléments d'accrochage en saillie du haut et du bas;
un écrou à chapeau (10) est fixé sur le côté iinférieur de l'élément d'accrochage en saillie du bas;
une patte de positionnement (21) faisant saillie à l'intérieur est formée au moins sur l'un des côtés intérieurs des éléments d'accrochage en saillie du haut et du bas (15b) du support de fixation;
une rainure (27) est prévue dans la position qui correspond à la patte de positionnement du support de fixation dans la partie en saillie de la cuve;
la patte de positionnement est insérée dans la rainure, et le support de fixation est fixé à la cuve des deux côtés de manière à ce que l'élément en saillie soit saisi par les éléments d'accrochage en saillie du haut et du bas;
et
il est prévu un boulon (9) qui pénètre dans le couvercle à partir du haut du couvercle à l'endroit où le couvercle est fermé, et le couvercle est fixé à la cuve par vissage du boulon dans l'écrou à chapeau.

2. Structure de fixation d'une cuve (3) qui comprend un fond (3a) ainsi que des parois latérales (3b) prévues de part et d'autre du fond, et un couvercle (5) placé sur l'ouverture du haut de la cuve au moyen du support de fixation (7), **caractérisée en ce que** un élément en saillie (11) est formé vers l'extérieur dans les deux côtés des parois latérales près de l'extrémité au haut de la cuve;
le support de fixation comporte des éléments d'accrochage en saillie du haut et du bas (15a, 15b) servant à saisir l'élément en saillie sur les côtés du haut et du bas, et un élément de raccordement (17) servant à raccorder les éléments d'accrochage en saillie du haut et du bas;
un écrou (35) est fixé sur la surface supérieure de l'élément d'accrochage en saillie du haut;;
une patte de positionnement (21) faisant saillie à l'intérieur est formée au moins sur l'un des côtés intérieurs des éléments d'accrochage en saillie du haut et du bas du support de fixation;
une rainure (27) est prévue dans la position qui correspond à la patte de positionnement du support de fixation dans la partie en saillie de la cuve;
la patte de positionnement est insérée dans la rainure, et le support de fixation est fixé à la cuve des deux côtés de manière à ce que l'élément en saillie soit saisi par les éléments d'accrochage en saillie du haut et du bas;
il est prévu un boulon (9) qui pénètre dans le couvercle à partir du haut du couvercle à l'endroit où le couvercle est fermé, et le couvercle est fixé à la cuve par vissage du boulon dans l'écrou; et
une partie concave évitant de gêner le boulon est formée dans la position qui correspond au boulon dans la surface supérieure de l'élément en saillie.

3. Structure de fixation d'une cuve et couvercle selon l'une quelconque des revendications 1 et 2, **caractérisés en ce que** la cuve est placée dans le sol de manière à ce que la surface supérieure de la cuve, lorsque le couvercle est fermé, se trouve approximativement à la hauteur du sol qui l'entoure

4. Structure de fixation d'une cuve et couvercle selon la revendication 2, **caractérisés en ce que** l'écrou (35) est une vis femelle formée dans l'élément d'accrochage en saillie du haut (15a).

5. Structure de fixation d'une cuve et couvercle selon la revendication 2, **caractérisés en ce que** l'écrou est raccordé à une plaque (33), et **en ce que** cette plaque à laquelle l'écrou se trouve raccordé est fixée à l'élément d'accrochage en saillie du haut (15a) au moyen d'un boulon (39).

6. Structure de fixation d'une cuve et couvercle selon l'une quelconque des revendications 1 et 2, **caractérisés en ce qu'**un crochet (43), servant à verrouiller le couvercle de l'extérieur, est formé dans l'élément de raccordement.

7. Procédé de fixation d'une cuve (3) qui comprend un fond (3a) ainsi que des parois latérales (3b) prévues de part et d'autre du fond, et un couvercle (5) disposé sur l'ouverture du haut de la cuve au moyen du support de fixation (7), **caractérisée en ce que**:
un élément en saillie (11) est formé vers l'extérieur dans les deux côtés des parois latérales près de l'extrémité au haut de la cuve;
un trou de pénétration pour boulon est formé dans l'élément en saillie;
le support de fixation comporte des éléments d'accrochage en saillie du haut et du bas (15a, 15b) servant à saisir l'élément en saillie sur les côtés du haut et du bas, un élément de raccordement (17) servant à raccorder les éléments d'accrochage en saillie du haut et
du bas, et un écrou à chapeau (19) prévu dans le côté inférieur de l'élément d'accrochage en saillie du bas (15b);
une patte de positionnement (21) faisant saillie à l'intérieur est formée au moins sur l'un des côtés intérieurs des éléments d'accrochage en saillie du haut et/ou du bas du support de fixation, et une rainure (27) est prévue dans le sens de montage du support de fixation au niveau de l'élément qui correspond à la patte de positionnement dans l'élément en saillie de la cuve;
à partir des deux côtés de l'élément en saillie, la patte de positionnement est insérée le long de la rainure, et le support de fixation est fixé à l'élément en saillie de la cuve; et
du béton est coulé à l'extérieur de la cuve;
il est prévu un boulon (9) qui pénètre dans le couvercle à partir du haut du couvercle à l'endroit où le couvercle est fermé, et le couvercle est fixé à la cuve par vissage du boulon dans l'écrou à chapeau.

8. Procédé de fixation d'une cuve (3) qui comprend un fond (3a) ainsi que des parois latérales (3b) prévues de part et d'autre du fond, et un couvercle (5) disposé sur l'ouverture du haut de la cuve au moyen du support de fixation (7), **caractérisé en ce que** un élément en saillie (11) est formé vers l'extérieur dans les deux côtés des parois latérales près de l'extrémité au haut de la cuve;
le support de fixation comporte des éléments d'accrochage en saillie du haut et du bas (15a, 15b) servant à saisir l'élément en saillie des côtés supérieur et inférieur, un élément de raccordement (17) servant à raccorder les éléments d'accrochage en saillie du haut et du bas, et un écrou (35) prévu dans la surface supérieure de l'élément d'accrochage en saillie du haut;
une partie concave, évitant de gêner le boulon vissé dans l'écrou, est formée dans la position qui correspond au boulon dans la surface supérieure de l'élément en saillie;
une patte de positionnement (21) faisant saillie à l'intérieur est formée au moins sur l'un des côtés intérieurs des éléments d'accrochage en saillie du haut et/ou du bas du support de fixation, et une rainure (27) est prévue dans le sens de montage du support de fixation au niveau de l'élément qui correspond à la patte de positionnement dans l'élément en saillie de la cuve;
à partir des deux côtés de l'élément en saillie, la patte de positionnement est insérée le long de la rainure, et le support de fixation est fixé à l'élément en saillie de la cuve;
du béton est coulé à l'extérieur de la cuve; et
il est prévu le boulon (9) qui pénètre dans le couvercle à partir du haut du couvercle à l'endroit où le couvercle est fermé, et le couvercle est fixé à la cuve par vissage du boulon dans l'écrou.
